# EUROPEAN PATENT APPLICATION

(11) **EP 4 821 661 A1**
(43) Date of publication of application: **14.10.2026**
(21) Application number: 25741672.7
(22) Date of filing: 11.03.2025
(51) Int. Cl.: B29C 64/209, B29C 64/227, B33Y 30/00

(54) **PRINTING PANEL DETECTION METHOD, 3D PRINTER, AND ELECTRONIC DEVICE**

(30) Priority: 16.01.2024 CN 202410065074
(71) Applicant: Shenzhen Tuozhu Technology Co., Ltd., Shenzhen, Guangdong 518000 (CN)
(72) Inventor: WANG, Yuran, Shenzhen, Guangdong 518000 (CN); CHEN, Zihan, Shenzhen, Guangdong 518000 (CN)
(74) Representative: Grünecker Patent- und Rechtsanwälte PartG mbB
(86) International application number: PCT/CN2025/081815
(87) International publication number: WO 2025/153111

(57) **Abstract**

Provided in the present disclosure are detection method for build plate, a 3D printer, and an electronic device. The detection method is applicable to a 3D printer, which comprises a heatbed, a toolhead and a build plate, wherein a detection device is disposed in the toolhead. In a specific implementation, the method comprises: controlling a toolhead to move to a target region, and controlling the toolhead to descend; and during the process of controlling the toolhead to descend, on the basis of a signal output by a detection device, detecting whether a build plate is placed on the surface of a heatbed. By means of implementing the present disclosure, whether a printing panel is placed on the surface of a heatbed can be automatically detected, such that the reliability is high.

## Description

The present disclosure claims priority to Chinese Patent Application No. 202410065074.7 filed with China National Intellectual Property Administration on January 16, 2024 and entitled "DETECTION METHOD FOR BUILD PLATE, 3D PRINTER, AND ELECTRONIC DEVICE", the content of which is incorporated herein by reference in its entirety.

### TECHNICAL FIELD

The present disclosure relates to the technical field of 3D printing, and in particular, to a detection method for a build plate, a 3D printer, and an electronic device.

### BACKGROUND

A 3D printer, also known as a three-dimensional printer or an additive manufacturing equipment, is a type of process equipment for rapid prototyping. The 3D printing technology that can be currently used in a 3D printer is fused deposition modeling (FDM). FDM is a technology based on digital models for constructing three-dimensional objects by using printing materials such as powdered metal or plastic through layer-by-layer printing.

In the 3D printer, a build plate needs to be placed on the surface of the heatbed, and the build plate is configured to carry the printing material. In this case, the printing material adheres to the surface of the build plate, and after printing is completed, the printed object can be removed from the build plate. If the build plate is not in place, the printing material is extruded directly onto the heatbed, resulting in the printed object being difficult to remove, or even damaging the 3D printer. Therefore, it is necessary to detect whether the build plate is placed in the 3D printer.

### SUMMARY

The present disclosure provides a detection method for a build plate, a 3D printer, and an electronic device, which can detect whether the build plate is placed on the surface of a heatbed, offering high reliability.

In a first aspect, embodiments of the present disclosure provide a detection method for a build plate. The detection method is applicable to a 3D printer, the 3D printer includes a heatbed, a toolhead, and a build plate, and the toolhead is provided with a detection device. In a specific implementation, the toolhead is controlled to move to a target region, and the toolhead is controlled to descend; and during a process of controlling the toolhead to descend, whether the build plate is placed on a surface of the heatbed is detected based on a signal output by the detection device.

In the present disclosure, whether the build plate is placed on the surface of the heatbed can be automatically detected, thereby preventing the direct extrusion of the printing material onto the surface of the heatbed and ensuring the print quality with high reliability.

With reference to the first aspect, in a first possible implementation, the above detection device includes a force sensing device. During the above process of controlling the toolhead to descend, detecting, based on the signal output by the detection device, whether the build plate is placed on the surface of the heatbed is specifically implemented as follows:
in a case where the toolhead is controlled to descend to within a range of a preset height, if a signal output by the force sensing device changes, it is detected that the build plate is placed on the surface of the heatbed.

In the present disclosure, when the toolhead abuts against the build plate, the force exerted on the toolhead changes, and the signal output by the force sensing device changes, thereby detecting whether the build plate is placed on the surface of the heatbed. By implementing the present disclosure, the force sensing device is used to detect whether the build plate is placed on the surface of the heatbed, resulting in low costs and high accuracy.

With reference to the first aspect or with reference to any one of the above possible implementations of the first aspect, in a second possible implementation, the above detection device includes a force sensing device. During the above process of controlling the toolhead to descend, detecting, based on the signal output by the detection device, whether the build plate is placed on the surface of the heatbed is specifically implemented as follows:
in a case where the toolhead is controlled to descend to within a range of a preset height, if a signal output by the force sensing device does not change, it is detected that the build plate is not placed on the surface of the heatbed.

With reference to the first aspect or with reference to any one of the above possible implementations of the first aspect, in a third possible implementation, before controlling the toolhead to move to the target region and controlling the toolhead to descend, the detection method further includes: controlling the toolhead to move to a lowest point of a printing space of the 3D printer, the preset height being a height at which the lowest point is located.

In the present disclosure, if the build plate is placed on the surface of the heatbed, the height of the lowest point of the printing space is the height of the build plate; that is, within the height of the build plate, the toolhead abuts against the build plate, resulting in a change in the force exerted on the toolhead and a change in the signal output by the force sensing device.

With reference to the first aspect or with reference to any one of the above possible implementations of the first aspect, in a fourth possible implementation, the above target region is a projection region of a suspended part of the build plate relative to the heatbed in a three-dimensional space in a direction perpendicular to the surface of the heatbed.

With reference to the first aspect or with reference to any one of the above possible implementations of the first aspect, in a fifth possible implementation, the above force sensing device is configured to output a signal that changes in a case where the toolhead is subjected to a force exerted by the build plate. In the present disclosure, whether the build plate is placed on the surface of the heatbed is detected based on the feedback of the force exerted by the build plate to the toolhead when the toolhead abuts against the build plate.

With reference to the first aspect or with reference to any one of the above possible implementations of the first aspect, in a sixth possible implementation, the toolhead includes an extrusion wheel, a hotend assembly, and a support, the support is disposed between the extrusion wheel and the hotend assembly, and the force sensing device is disposed on a side, facing the hotend assembly, of the support. Illustratively, the force sensing device may be specifically implemented as a first coil. With reference to the first aspect or with reference to any one of the above possible implementations of the first aspect, in a seventh possible implementation, the above detection device includes a distance sensing device.

During the above process of controlling the toolhead to descend, detecting, based on the signal output by the detection device, whether the build plate is placed on the surface of the heatbed is specifically implemented as follows:
during the process of controlling the toolhead to descend, detecting, based on whether a signal output by the distance sensing device continuously increases or decreases, whether the build plate is placed on the surface of the heatbed.

In the present disclosure, the distance sensing device outputs a continuously increasing or decreasing signal based on the change in the distance between the toolhead and the build plate or the change in the distance between the toolhead and the surface of the heatbed, thereby achieving the detection of whether the build plate is placed on the surface of the heatbed.

With reference to the first aspect or with reference to any one of the above possible implementations of the first aspect, in an eighth possible implementation, the above build plate is a conductor, and the above surface of the heatbed is a non-conductor.

Detecting, based on whether the signal output by the distance sensing device continuously increases or decreases, whether the build plate is placed on the surface of the heatbed is specifically implemented as follows:
detecting, based on a continuously increasing or decreasing signal output by the distance sensing device, that the build plate is placed on the surface of the heatbed.

In the present disclosure, since the build plate is a conductor and the surface of the heatbed is a non-conductor, if the build plate is placed on the surface of the heatbed, the distance sensing device can sense the change in the distance between the toolhead and the conductor, i.e., the build plate, during the descent. However, the distance sensing device cannot sense the change in the distance between the toolhead and the non-conductor, i.e., the heatbed, during the descent, thereby achieving the detection of whether the build plate is placed on the surface of the heatbed.

With reference to the first aspect or with reference to any one of the above possible implementations of the first aspect, in a ninth possible implementation, the above target region is a projection region of the build plate in a three-dimensional space in a direction perpendicular to the surface of the build plate.

With reference to the first aspect or with reference to any one of the above possible implementations of the first aspect, in a tenth possible implementation, the above build plate is a non-conductor, and the above surface of the heatbed is a conductor.

Detecting, based on whether the signal output by the distance sensing device continuously increases or decreases, whether the build plate is placed on the surface of the heatbed is specifically implemented as follows:
detecting, based on a fact that the signal output by the distance sensing device does not change, that the build plate is placed on the surface of the heatbed.

With reference to the first aspect or with reference to any one of the above possible implementations of the first aspect, in an eleventh possible implementation, the target region is a projection region of the heatbed in a three-dimensional space in a direction perpendicular to the surface of the heatbed.

In a second aspect, the embodiments of the present disclosure provide a 3D printer. The 3D printer includes a heatbed, a toolhead, a build plate, and a controller, and the controller is configured to perform the detection method described with reference to the first aspect or with reference to any one of the above possible implementations of the first aspect.

In a third aspect, the embodiments of the present disclosure provide a computer-readable storage medium. The computer-readable storage medium stores a computer program thereon, and the computer program, when executed by a processor, causes the processor to perform the detection method described with reference to the first aspect or with reference to any one of the above possible implementations of the first aspect.

In a fourth aspect, the embodiments of the present disclosure provide a computer program product including a computer program, where the computer program, when executed by a processor, causes the processor to perform the detection method described with reference to the first aspect or with reference to any one of the above possible implementations of the first aspect.

It should be understood that for implementation and beneficial effects of the above aspects of the present disclosure, reference may be made to each other.

### BRIEF DESCRIPTION OF THE DRAWINGS

FIG. 1 is a schematic structural diagram of a 3D printer according to an embodiment of the present disclosure;
FIG. 2 is a schematic flowchart of a detection method for a build plate according to an embodiment of the present disclosure;
FIG. 3 is a schematic diagram of the relative position between a heatbed and a build plate according to an embodiment of the present disclosure;
FIG. 4 is a schematic structural diagram of a toolhead according to an embodiment of the present disclosure; and
FIG. 5 is another schematic structural diagram of a toolhead according to an embodiment of the present disclosure.

### DETAILED DESCRIPTION

Implementations of the technical solutions of the present disclosure are further described in detail below with reference to the accompanying drawings.

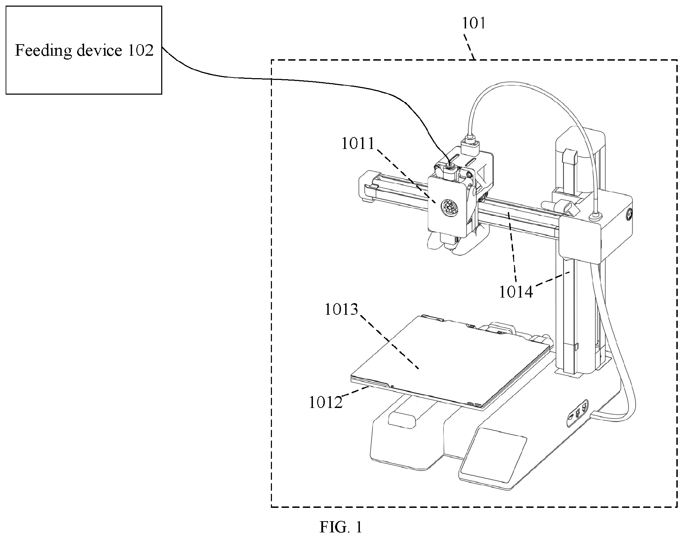

Referring to FIG. 1, FIG. 1 is a schematic structural diagram of a 3D printer according to an embodiment of the present disclosure. As shown in FIG. 1, the 3D printer 101 is configured to be connected to a feeding device 102, and the feeding device 102 can provide a printing material to the 3D printer 101.

The 3D printer 101 includes a toolhead 1011, a heatbed 1012, and a build plate 1013, and the build plate 1013 is placed on a surface of the heatbed 1012. The build plate 1013 is specifically placed on the surface, facing the toolhead 1011, of the heatbed 1012.

The 3D printer 101 further includes a motion assembly 1014. The motion assembly 1014 is connected to at least one of the toolhead 1011 and the heatbed 1012. During the movement of the motion assembly 1014, at least one of the toolhead 1011 and the heatbed 1012 can be driven, such that a relative displacement between the toolhead 1011 and the heatbed 1012 is generated. Since the build plate 1013 is placed on the surface of the heatbed 1012, a relative displacement between the toolhead 1011 and the build plate 1013 can be generated. Illustratively, the motion assembly 1014 may include a timing belt, a lead screw, a guide rail, or the like. The specific form of the motion assembly is not limited in the present disclosure.

The toolhead 1011 includes an extrusion assembly and a hotend. The extrusion assembly conveys the printing material provided by the feeding device 102 to the 3D printer 101 toward the hotend, the hotend has a heating function, and the hotend heats the printing material to a molten state and extrudes the printing material in the molten state onto the build plate 1013.

Illustratively, the hotend includes heat sink fins, a nozzle, and a heatbreak located between the heat sink fins and the nozzle. The printing material sequentially passes through the heat sink fins, the heatbreak, and the nozzle. Specifically, the printing material is heated to a molten state at the nozzle, and the nozzle extrudes the printing material in the molten state onto the build plate 1013. During the movement of at least one of the toolhead 1011 and the heatbed 1012 along the printing path, the nozzle extrudes the printing material in the molten state to different positions of the build plate 1013 layer by layer, thereby printing a three-dimensional object.

The extrusion assembly includes a driving wheel and a driven wheel arranged opposite to the driving wheel, and the printing material passes between the driving wheel and the driven wheel. The driving wheel rotates in a first direction to drive the printing material toward the hotend; and the driving wheel rotates in a second direction opposite to the first direction to drive the printing material back to the feeding device 102.

In FIG. 1, the 3D printer being of a cantilever structure is taken as an example. In some feasible embodiments, the structure of the 3D printer may be a gantry structure, a Core XY structure, a Core XZ structure, or the like. The specific structure of the 3D printer is not limited in the present disclosure. As can be seen from the 3D printer described with reference to FIG. 1, the printing material in the molten state needs to be extruded onto the build plate to improve the adhesion of the printing material. In addition, after the printing is completed, the build plate can be removed from the surface of the heatbed, so as to facilitate the removal of the printed three-dimensional object from the build plate. Therefore, for the 3D printer, it is crucial to detect whether the build plate is placed on the surface of the heatbed.

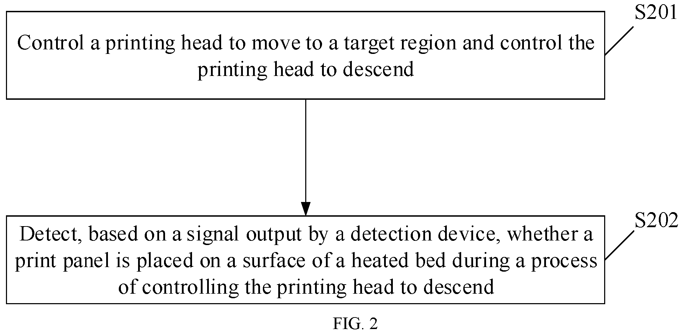

How to specifically implement the detection of the build plate is further described below with reference to FIGs. 2 to 5.

Referring to FIG. 2, FIG. 2 is a schematic flowchart of a detection method for a build plate according to an embodiment of the present disclosure. As shown in FIG. 2, the steps of the detection method include:
In step S201, the toolhead is controlled to move to a target region, and the toolhead is controlled to descend.

The steps of the detection method according to the present disclosure may be performed by one controller or a plurality of controllers communicatively connected to each other. The controller may be disposed on the toolhead of the 3D printer, the motion assembly, or the like. That is, the number of controllers and the locations at which the controllers are arranged are not limited in the present disclosure.

Illustratively, the controller may be a micro control unit (MCU), a central processing unit (CPU), another general-purpose processor, a digital signal processor (DSP), an application specific integrated circuit (ASIC), a field-programmable gate array (FPGA), or another programmable logic device, a discrete logic gate or a transistor logic device, a discrete hardware component, or the like.

Optionally, while controlling the toolhead to move to the target region, the toolhead is controlled to descend; or after controlling the toolhead to move to the target region, the toolhead is controlled to descend; or after controlling the toolhead to descend, the toolhead is controlled to move to the target region.

The target region may be a preset region, and the selection of the target region is related to the specific detection method of the detection device.

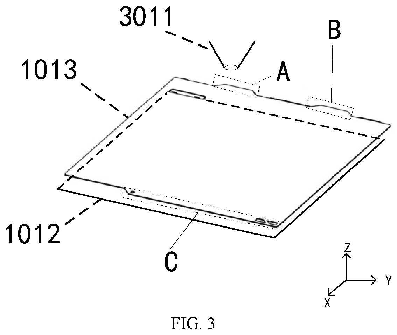

In some feasible embodiments, the detection device includes a force sensing device. Referring to FIG. 3, FIG. 3 is a schematic diagram of the relative position between a heatbed and a build plate according to an embodiment of the present disclosure. As shown in FIG. 3, when the build plate 1013 is placed on the surface of the heatbed 1012, the target region is a three-dimensional projection region of a suspended part of the build plate 1013 relative to the heatbed 1012, as projected in a direction perpendicular to the surface of the heatbed, i.e., the positive Z-axis direction. For example, the target region may be the projection region of at least one of the region A, the region B, and the region C in the three-dimensional space. The toolhead is controlled to move to the target region; that is, the nozzle 3011 in the toolhead is controlled to move to the projection region of at least one of the region A, the region B, and the region C in the three-dimensional space, i.e., any projection region of the region A, the region B, and/or the region C in the positive direction of the Z-axis. In this case, the target region is a region in which the build plate 1013 has a part protruding from the surface of the heatbed 1012 or a suspended part relative to the heatbed 1012 in the XY plane. The nozzle 3011 in the toolhead descends in the negative direction of the Z-axis. If the build plate 1013 is placed on the heatbed 1012, the nozzle 3011 in the toolhead can abut against the build plate 1013 within a range of a preset height. It can be understood that, because the nozzle 3011 abuts against a solid part of the build plate 1013, the target region needs to avoid a hole penetrating through the build plate 1013. If the build plate 1013 is not placed on the heatbed 1012, the nozzle 3011 in the toolhead cannot abut against the build plate 1013 within the range of the preset height.

Optionally, in some feasible embodiments, the detection device is a distance sensing device. In the direction perpendicular to the surface of the build plate, a projection region of the build plate in a three-dimensional space is the target region. Alternatively, in the direction perpendicular to the surface of the heatbed, a projection region of the heatbed in a three-dimensional space is the target region.

In step S202, whether the build plate is placed on the surface of the heatbed is detected based on a signal output by the detection device during a process of controlling the toolhead to descend.

Illustratively, whether the build plate is placed on the surface of the heatbed may be detected based on the frequency magnitude or frequency changes in the signal output by the detection device. Alternatively, whether the build plate is placed on the surface of the heatbed may be detected based on the amplitude or amplitude changes in the signal output by the detection device.

In some feasible embodiments, the detection device includes a force sensing device, and the force sensing device can output a signal that changes in the case where the toolhead is subjected to a force exerted by the build plate.

During the process of controlling the toolhead to descend, the specific implementation is as follows: in the case where the toolhead is controlled to descend to the range of the preset height, if a signal output by the force sensing device changes, it is detected that the build plate is placed on the surface of the heatbed; and if a signal output by the force sensing device does not change, it is detected that the build plate is not placed on the surface of the heatbed.

Before step S201 is performed, the toolhead may be controlled to move to a lowest point position of the printing space, and the lowest point position may be understood as the zero point of the three-dimensional coordinates of the printing space. The above preset height may be specifically considered as the Z-axis in the three-dimensional coordinates being equal to zero, and the range of the preset height may be understood as a range near the Z-axis. Illustratively, a height of 0.1 of the Z-axis may be considered to be within the range of the preset height, and a height of -0.1 of the Z-axis may also be considered to be within the range of the preset height. In the present disclosure, the range of the preset height may be determined according to actual needs, and the present disclosure does not limit the range of the preset height.

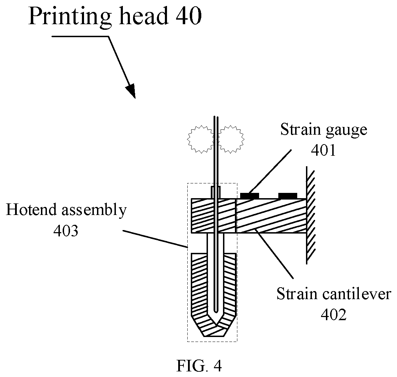

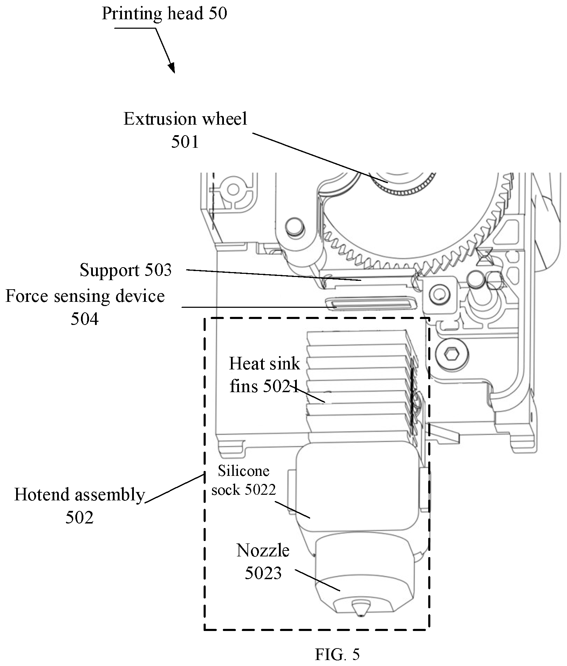

The structure of the force sensing device is illustratively described below with reference to FIGs. 4 and 5.

In some feasible embodiments, the structure of the toolhead may be shown in FIG. 4. The toolhead 40 includes a strain gauge 401, a strain cantilever 402, and a hotend assembly 403. The hotend assembly 403 is connected to one end of the strain cantilever 402, and the other end of the strain cantilever 402 is fixed. The surface of the strain cantilever 402 is attached with a strain gauge 401. When the hotend assembly 403 abuts against the build plate, the force exerted by the build plate to the hotend assembly 403 is transferred to the strain cantilever 402, causing deformation of the surface of the strain cantilever 402. If the hotend assembly 403 does not abut against the build plate, the surface of the strain cantilever 402 is not deformed. Therefore, whether the surface of the strain cantilever 402 is deformed can be monitored by detecting whether the amplitude of the signal output by the strain gauge 401 changes, thereby detecting whether the hotend assembly 403 abuts against the build plate and, accordingly, whether the build plate is placed on the surface of the heatbed.

In the present disclosure, when the toolhead abuts against the build plate, the toolhead is subjected to a force exerted by the build plate. Based on the feedback of the force exerted by the build plate to the toolhead, whether the build plate is placed on the surface of the heatbed is detected. By implementing the present disclosure, the strain gauge and the strain cantilever are used for detection, resulting in low costs and high accuracy.

Optionally, in some feasible embodiments, the structure of the toolhead may also be shown in FIG. 5. The toolhead 50 includes an extrusion wheel 501, a hotend assembly 502, and a support 503 located between the extrusion wheel 501 and the hotend assembly 502.

A force sensing device 504 is disposed on the support 503 at a side facing the hotend assembly 502, and the force sensing device 504 can sense the distance between the hotend assembly 502 and the support 503.

When the hotend assembly 502 abuts against the build plate, specifically when the nozzle 5023 in the hotend assembly 502 abuts against the build plate, the heat sink fins 5021 move toward one side close to the extrusion wheel 501, such that the distance between the hotend assembly 502 and the support 503 changes. Specifically, the distance between the heat sink fins 5021 and the support 503 changes, such that the signal output by the force sensing device 504 changes.

Illustratively, the force sensing device 504 may include a first coil, and the plane on which the first coil is located is parallel to the surface of the heat sink fins 5021. The heat sink fins 5021 are metal conductors, which change the magnetic field intensity of the first coil when the heat sink fins 5021 move toward one side close to the extrusion wheel. Illustratively, the first coil is connected to a first LC resonant circuit, and a change in the magnetic field intensity of the first coil is specifically represented as a change in the inductance in the first LC resonant circuit, causing the frequency of the signal in the first LC resonant circuit to change. That is, whether the build plate is placed on the surface of the heatbed can be detected by detecting the signal frequency changes in the first coil.

Optionally, the hotend assembly 502 may further include a silicone sock 5022. The silicone sock 5022 is arranged around the heating unit to prevent heat loss of the heating unit and prevent a user from being scalded when touching the hotend assembly accidentally.

In the embodiments of the present disclosure, a force sensing device is added between the support and the hotend assembly. The force sensing device monitors the distance between the hotend assembly and the support to determine whether the hotend assembly abuts against the build plate; that is, the force exerted by the build plate to the toolhead is converted into the distance between the hotend assembly and the support to determine whether the hotend assembly abuts against the build plate, thereby determining whether the build plate is placed on the surface of the heatbed. By implementing the embodiments of the present disclosure, the structure is simple, the design flexibility is high, the space utilization rate is improved, and the costs are lower.

Optionally, in some feasible embodiments, the detection device includes a distance sensing device. In the case where a conductor is disposed in the target region, as the toolhead descends, the distance sensing device can output a signal, for example, a continuously increasing or decreasing signal.

Illustratively, the build plate is a conductor, and the surface of the heatbed is a non-conductor. In this case, the target region is a projection region of the build plate in a three-dimensional space in the direction perpendicular to the surface of the build plate, i.e., any projection region of the build plate in the positive direction of the Z-axis.

If the build plate is placed on the surface of the heatbed, the distance sensing device can output a continuously increasing or decreasing signal based on the change in the distance between the toolhead and the build plate. Illustratively, the distance sensing device includes a second coil. The second coil may be disposed in the toolhead, for example, disposed on a surface of the toolhead that is close to the heatbed.. The second coil is connected to a second LC resonant circuit, and during the descent of the toolhead, the magnetic field intensity of the second coil changes monotonically. Specifically, this is represented by a corresponding monotonic change in the inductance of the second LC resonant circuit, causing the frequency of the signal in the second LC resonant circuit to change monotonically, for example, to continuously decrease. That is, whether the build plate is placed on the surface of the heatbed can be determined by detecting whether the signal frequency of the second coil continuously decreases during the descent of the toolhead.

If the build plate is not placed on the surface of the heatbed, the distance sensing device cannot sense the change in the distance between the toolhead and the build plate, and the output signal does not change.

Alternatively, the build plate is a non-conductor, and the surface of the heatbed is a conductor. In this case, the target region is a projection region of the heatbed in a three-dimensional space in the direction perpendicular to the surface of the heatbed, i.e., any projection region of the heatbed in the positive direction of the Z-axis.

If the build plate is placed on the surface of the heatbed, the build plate prevents the distance sensing device from sensing the change in the distance between the toolhead and the heatbed. In this case, the signal output by the distance sensing device does not change.

If the build plate is not placed on the surface of the heatbed, the distance sensing device can output a continuously increasing or decreasing signal based on the change in the distance between the toolhead and the heatbed. For specific implementation, reference can be made to the foregoing second coil. Details are not described herein again.

The embodiments of the present disclosure further provide a computer program product. The computer program product includes a computer program that, when run on a computer, causes the computer to perform the detection method according to the embodiments of the present disclosure.

The computer program may be stored in a computer-readable storage medium or may be transmitted from a computer-readable storage medium to another. For example, the computer instruction may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any available medium accessible by a computer, or may include one or more data storage devices such as servers and data centers capable of being integrated with the medium. The available medium may be a magnetic medium (for example, a floppy disk, a hard disk, or a magnetic tape), an optical medium, a semiconductor medium (for example, a solid-state drive), or the like.

It should be noted that the terms "first" and "second" described above are used for descriptive purposes only and are not to be construed as indicating or implying relative importance.

The above descriptions are specific embodiments of the present disclosure. However, the protection scope of the present disclosure is not limited to this. Any variations or substitutions that those skilled in the art can easily think of within the technical scope disclosed in the present disclosure should be included within the protection scope of the present disclosure. Therefore, the protection scope of the present disclosure should be subject to the protection scope defined by the claims.

## Claims

1. A detection method for a build plate, wherein the detection method is applicable to a 3D printer, the 3D printer comprises a heatbed, a toolhead, and a build plate, and the toolhead is provided with a detection device;
the detection method comprises:
controlling the toolhead to move to a target region and controlling the toolhead to descend; and
during a process of controlling the toolhead to descend, detecting, based on a signal output by the detection device, whether the build plate is placed on a surface of the heatbed.

2. The detection method according to claim 1, wherein the detection device comprises a force sensing device;
during the process of controlling the toolhead to descend, detecting, based on the signal output by the detection device, whether the build plate is placed on the surface of the heatbed comprises:
in a case where the toolhead is controlled to descend to within a range of a preset height, if a signal output by the force sensing device changes, detecting that the build plate is placed on the surface of the heatbed.

3. The detection method according to claim 1 or 2, wherein the detection device comprises a force sensing device;
during the process of controlling the toolhead to descend, detecting, based on the signal output by the detection device, whether the build plate is placed on the surface of the heatbed comprises:
in a case where the toolhead is controlled to descend to within a range of a preset height, if a signal output by the force sensing device does not change, detecting that the build plate is not placed on the surface of the heatbed.

4. The detection method according to claim 2 or 3, wherein before controlling the toolhead to move to the target region and controlling the toolhead to descend, the detection method further comprises:
controlling the toolhead to move to a lowest point of a printing space of the 3D printer;
the preset height being a height at which the lowest point is located.

5. The detection method according to any one of claims 2 to 4, wherein the target region is a projection region of a suspended part of the build plate relative to the heatbed in a three-dimensional space in a direction perpendicular to the surface of the heatbed.

6. The detection method according to any one of claims 2 to 5, wherein the force sensing device is configured to output a signal that changes in a case where the toolhead is subjected to an acting force exerted by the build plate.

7. The detection method according to any one of claims 2 to 6, wherein the toolhead comprises an extrusion wheel, a hotend assembly, and a support, the support is disposed between the extrusion wheel and the hotend assembly, and the force sensing device is disposed on a side, facing the hotend assembly, of the support.

8. The detection method according to claim 1, wherein the detection device comprises a distance sensing device;
during the process of controlling the toolhead to descend, detecting, based on the signal output by the detection device, whether the build plate is placed on the surface of the heatbed comprises:
during the process of controlling the toolhead to descend, detecting, based on whether a signal output by the distance sensing device continuously increases or decreases, whether the build plate is placed on the surface of the heatbed.

9. The detection method according to claim 8, wherein the build plate is a conductor, and the surface of the heatbed is a non-conductor;
detecting, based on whether the signal output by the distance sensing device continuously increases or decreases, whether the build plate is placed on the surface of the heatbed comprises:
detecting, based on a continuously increasing or decreasing signal output by the distance sensing device, that the build plate is placed on the surface of the heatbed.

10. The detection method according to claim 8 or 9, wherein the target region is a projection region of the build plate in a three-dimensional space in a direction perpendicular to a surface of the build plate.

11. The detection method according to claim 8, wherein the build plate is a non-conductor, and the surface of the heatbed is a conductor;
detecting, based on whether the signal output by the distance sensing device continuously increases or decreases, whether the build plate is placed on the surface of the heatbed comprises:
detecting, based on a fact that the signal output by the distance sensing device does not change, that the build plate is placed on the surface of the heatbed.

12. The detection method according to claim 8 or 11, wherein the target region is a projection region of the heatbed in a three-dimensional space in a direction perpendicular to the surface of the heatbed.

13. A 3D printer, wherein the 3D printer comprises a heatbed, a toolhead, a build plate, and a controller, and the controller is configured to perform the detection method according to any one of claims 1 to 12.

14. A computer-readable storage medium, wherein the computer-readable storage medium stores a computer program thereon, and the computer program, when executed by a processor, causes the processor to perform the detection method according to any one of claims 1 to 12.

15. A computer program product comprising a computer program, wherein the computer program, when executed by a processor, causes the processor to perform the detection method according to any one of claims 1 to 12.
